# EUROPEAN PATENT SPECIFICATION

(11) **EP 2 398 576 B1**
(45) Date of publication and mention of the grant of the patent: **26.03.2014**
(21) Application number: 10705243.3
(22) Date of filing: 17.02.2010
(51) Int. Cl.: B01D 67/00, D06M 14/26, D06M 15/27

(54) **HYDROPHILIC POROUS SUBSTRATES**
HYDROPHILE PORÖSE SUBSTRATE
SUBSTRATS POREUX HYDROPHILES

(30) Priority: 18.02.2009 US 388146; 08.02.2010 US 701821
(43) Date of publication of application: 28.12.2011
(73) Proprietor: 3M Innovative Properties Company, Saint Paul, MN 55133-3427 (US)
(72) Inventor: HESTER, Jonathan F.,, Saint Paul, Minnesota 55133-3427 (US); RICHTER, Karl B.,, Saint Paul, Minnesota 55133-3427 (US); WALLER, Clinton P. Jr.,, Saint Paul, Minnesota 55133-3427 (US); WEISS, Douglas E.,, Saint Paul, Minnesota 55133-3427 (US)
(74) Representative: Vossius & Partner
(86) International application number: PCT/US2010/024401
(87) International publication number: WO 2010/096429

(56) References cited:
- EP-A1- 1 552 878
- WO-A1-2007/078878
- WO-A1-2009/086347
- WO-A1-2009/148869
- US-A- 5 531 900

## Description

### Technical Field

The present disclosure relates to hydrophilic substrates, and methods for preparing the same.

### Background

There is a need in the art for polymeric substrates having enhanced hydrophilicity. Further, there is a need in the art for methods of making polymeric substrates having enhanced hydrophilicity from hydrophobic polymers.

### Summary of the Invention

The present invention is directed to hydrophilic substrates and methods of making hydrophilic substrates. More specifically, the hydrophilic substrates include a hydrophobic base substrate, preferably porous, that has been modified to provide the requisite hydrophilicity.

Methods of making a hydrophilic substrate are provided. In some embodiments, the method comprises:
1) providing a base substrate, preferably having interstitial and outer surfaces;
2) saturating the base substrate with a first solution comprising (a) at least one grafting monomer having at least one (meth)acrylate group and at least one additional ethylenically unsaturated, free-radically polymerizable group; and optionally (b) one or more additional monomers having at least one ethylenically unsaturated, free-radically polymerizable group and a hydrophilic group; and (c) a chain transfer agent, wherein at least one of (a) or (b) monomers are hydrophilic;
3) exposing the saturated porous base substrate to a controlled amount of gamma radiation so as to form a functionalized substrate comprising grafted (co)polymer groups attached to the surfaces of the base substrate.

The method described herein can more efficiently produce a hydrophilic article using lower doses of gamma radiation - typically 1/10 that of a similar process using e-beam. The longer lifetime of the radicals generated by the lower flux of gamma radiation allow the use of less reactive monomers, such as methacrylate, which are more efficiently polymerized at slower rates and results in lower residual monomer content. The instant method also can use lower concentrations of the monomers. As used herein "(meth)acrylate" is inclusive of methacrylate and acrylate, unless otherwise specified.

An article is provided that comprises (a) a first grafted species comprising the reaction product of a monomer having at least one (meth)acrylate group and at least one additional ethylenically unsaturated, free-radically polymerizable group and optionally (b) a second species comprising the polymerization reaction product of monomers having at least one ethylenically unsaturated, free-radically polymerizable group and a hydrophilic group, with the surfaces of the porous base substrate upon exposure to gamma irradiation. At least one of (a) or (b) monomers is hydrophilic. Any free ethylenically unsaturated groups that remain ungrafted to the porous base substrate may crosslink and/or polymerize upon subsequent exposure to gamma radiation.

With respect to the method and article, all or a portion of the (meth)acrylate groups of the monomer (a) will be grafted to the surface of the base substrate upon gamma irradiation. The ungrafted monomers, including unreacted (a) and (b) monomers may be subsequently incorporated into the growing polymer chain on exposure to gamma radiation. Some portion of the (b) hydrophilic monomers may be directly grafted to the surfaces (for example by grafting of an acrylate group), or incorporated into the growing polymer chain on exposure to gamma radiation.

These and other features and advantages of the present invention will become apparent after a review of the following detailed description of the disclosed embodiments and the appended claims.

### Detailed Description of the Invention

In the article and methods of this invention, hydrophilic porous articles are provided by a process of gamma radiation-initiated grafting of monomers, preferably in the presence of a chain transfer agent. Compared to the ungrafted base substrate, the graft polymer-functionalized substrate has hydrophilicity as measured by the critical wetting surface tension, and good flux rates. The hydrophilic substrate comprises a number of components including, but not limited to, (1) a base substrate, preferably a porous base substrate having interstitial and outer surfaces, and (2) the gamma radiation-initiated reaction product of (a) one or more monomers having at least one (meth)acrylate group and at least one additional free-radically polymerizable group; and optionally (b) one or more additional monomers having at least one free-radically polymerizable group and a hydrophilic group; wherein at least one of (a) or (b) monomers are hydrophilic. Preferably the monomer mixture comprises a chain transfer agent to limit the molecular weight of the resulting grafted polymer.

The base substrate may be nonporous or porous. The base substrate may be in any form such as films, fibers or sheets. The substrate may be incorporated into various configurations, such as rolls or cylinders. Some of the porous base substrates used in this embodiment can be porous, microporous, nonwoven, or a combination thereof. In one exemplary embodiment, the porous base substrate comprises a microporous base substrate having an average pore size that is typically less than about 1 micron. The microporous base substrate is often initially hydrophobic and is rendered hydrophilic by the methods described herein.

Suitable porous base substrates include, but are not limited to, porous membranes, porous nonwoven webs, and porous fibers. The porous base substrate may be formed from any suitable thermoplastic polymeric material. Suitable polymeric materials include, but are not limited to, polyolefins, poly(isoprenes), poly(butadienes), fluorinated polymers, chlorinated polymers, polyamides, polyimides, polyethers, poly(ether sulfones), poly(sulfones), poly(vinyl acetates), copolymers of vinyl acetate, poly(phosphazenes), poly(vinyl esters), poly(vinyl ethers), poly(vinyl alcohols), and poly(carbonates).

Suitable polyolefins include, but are not limited to, poly(ethylene), poly(propylene), poly(1-butene), copolymers of ethylene and propylene, alpha olefin copolymers (such as copolymers of ethylene or propylene with 1-butene, 1-hexene, 1-octene, and 1-decene), poly(ethylene-*co*-1-butene) and poly(ethylene-*co*-1-butene-*co*-1-hexene).

Suitable fluorinated polymers include, but are not limited to, poly(vinyl fluoride), poly(vinylidene fluoride), copolymers of vinylidene fluoride (such as poly(vinylidene fluoride-co-hexafluoropropylene), and copolymers of chlorotrifluoroethylene (such as poly(ethylene-co-chlorotrifluoroethylene, ECTFE).

Suitable polyamides include, but are not limited to, poly(imino(1-oxohexamethylene)), poly(iminoadipoyliminohexamethylene), poly(iminoadipoyliminodecamethylene), and polycaprolactam. Suitable polyimides include, but are not limited to, poly(pyromellitimide).

Suitable poly(ether sulfones) include, but are not limited to, poly(diphenylether sulfone) and poly(diphenylsulfone-*co*-diphenylene oxide sulfone).

Suitable copolymers of vinyl acetate include, but are not limited to, poly(ethylene-co-vinyl acetate) and such copolymers in which at least some of the acetate groups have been hydrolyzed to afford various poly(vinyl alcohols).

In some embodiments, the base substrate is formed from a propylene homo- or copolymers, most preferably propylene homopolymers. Polypropylene polymers are often a material of choice for porous articles, such as nonwovens and microporous films, due to properties such as non-toxicity, inertness, low cost, and the ease with which it can be extruded, molded, and formed into articles. However, polypropylene is hydrophobic. While it is desirable to render hydrophobic polymers such as polypropylene hydrophilic, polypropylene treated with ionizing radiation is subject to degradation, e.g. embrittlement, discoloration, and thermal sensitivity, during or subsequent to irradiation, which therefore limits the ability to render such thermoplastic polymers hydrophilic by gamma radiation-initiated grafting.

For radiation sensitive substrates, such as polypropylene, the present invention overcomes such polymer degradation by using a low dose of gamma radiation to efficiently graft and polymerize the monomers on a portion of the surface.

In some embodiments, the porous base substrate is a microporous membrane such as a thermally-induced phase separation (TIPS) membrane. TIPS membranes are often prepared by forming a homogenous solution of a thermoplastic material and a second material above the melting point of the thermoplastic material. Upon cooling, the thermoplastic material crystallizes and phase separates from the second material. The crystallized thermoplastic material is often stretched. The second material is optionally removed either before or after stretching. Microporous membrane are further disclosed in U.S. Patent Nos. 4,539,256 (Shipman), 4,726,989 (Mrozinski), 4,867,881 (Kinzer), 5,120,594 (Mrozinski), 5,260,360 (Mrozinski et al.), and 5,962,544 (Waller), 6,096,293 (Mrozinski et al.) all of which are assigned to 3M Company (St. Paul, MN), and each incorporated herein by reference. Useful ECTFE membranes may be prepared according to U.S. 4,623,670, U.S. 4,702,836, U.S. 6,559,192, U.S. 7,247,238, and PCT Application US2009/067807 (Mrozinski et al.)

Some exemplary TIPS membranes comprise poly(vinylidene fluoride) (i.e. PVDF), polyolefins such as polyethylene homo- or copolymers or polypropylene homo- or copolymers, vinyl-containing polymers or copolymers such as ethylene-vinyl alcohol copolymers and butadiene-containing polymers or copolymers, and acrylate-containing polymers or copolymers. For some applications, a TIPS membrane comprising PVDF is particularly desirable. TIPS membranes comprising PVDF are further described in U.S. 7,338,692, (Smith et al.).

Other useful microporous substrates include symmetric, asymmetric, or multizone membranes, as well as multiple layers of such membranes. A symmetric membrane is one having substantially the same porosity and average pore size throughout its thickness. An asymmetric membrane is a membrane having a first average pore size or first porosity at one major surface and a second average pore size or second porosity at the opposing major surface, the average pore size or the porosity varying through the thickness of the membrane. A multizone membrane is a membrane having two or more substantially distinct through-thickness zones, or layers having different average pore sizes or different porosities. Multizone membranes are often designated by the number of layers or zones, (e.g. a 2-zone membrane has two substantially distinct zones having different average pore sizes or different porosities). Useful microporous membranes include those made from nylon, polyether sulfone, polyvinylidine fluoride, polypropylene, and ethylene-trichlorofluoroethylene (ECTFE).

The microporous membranes may have pore size ranges of 0.005 to 10 µm, preferably 0.01 to 1.5 µm, and thicknesses of 10 to 500 µm. In other embodiments the microporous substrate may be selected from asymmetric or multizone microporous membranes having gradient pore sizes in the range of 15 to 0.05 µm. In other embodiments, multiple layers of microporous membranes may be used in combination, with each layer having successively finer porosity, such as from 15 to 0.05 µm, preferably 10 to 0.5 µm, and total thicknesses of 75 to 1200 µm. Exemplary multizone membranes are described in copending U.S. 61/142056. In other embodiments, multiple layers of microporous membranes may be used in combination, with each layer having successively finer pore size, such as from 15 to 0.05 µm, preferably 10 to 0.5 µm, and total thicknesses of 75 to 1200 µm.

In other embodiments, the porous base substrate is a nonwoven web which may include nonwoven webs manufactured by any of the commonly known processes for producing nonwoven webs. As used herein, the term "nonwoven web" refers to a fabric that has a structure of individual fibers or filaments which are randomly and/or unidirectionally interlaid in a mat-like fashion.

For example, the fibrous nonwoven web can be made by carded, air laid, spunlaced, spunbonding or melt-blowing techniques or combinations thereof. Spunbonded fibers are typically small-diameter fibers that are formed by extruding molten thermoplastic polymer as filaments from a plurality of fine, usually circular capillaries of a spinneret with the diameter of the extruded fibers being rapidly reduced. Meltblown fibers are typically formed by extruding the molten thermoplastic material through a plurality of fine, usually circular, die capillaries as molten threads or filaments into a high velocity, usually heated gas (e.g. air) stream which attenuates the filaments of molten thermoplastic material to reduce their diameter. Thereafter, the meltblown fibers are carried by the high velocity gas stream and are deposited on a collecting surface to from a web of randomly disbursed meltblown fibers. Any of the non-woven webs may be made from a single type of fiber or two or more fibers that differ in the type of thermoplastic polymer, thickness thereof, or both.

Further details on the manufacturing method of non-woven webs of this invention may be found in Wente, Superfine Thermoplastic Fibers, 48 INDUS. ENG. CHEM. 1342(1956), or in Wente et al., Manufacture Of Superfine Organic Fibers, (Naval Research Laboratories Report No. 4364, 1954).

The functionalized substrate has polymeric species attached to the surfaces of the porous base substrate which includes interpolymerized monomer units of (a) at least one grafting monomer having at least one (meth)acrylate group and at least one additional ethylenically unsaturated, free-radically polymerizable group; and optionally (b) one or more additional monomers having at least one ethylenically unsaturated, free-radically polymerizable group and a hydrophilic group; wherein at least one of (a) and (b) monomers are hydrophilic. The molecular weight and the degree of polymerization of the polymers are controlled by the use of a chain transfer agent in the monomer solution.

The grafting of monomers to the surface of the base substrate results in a hydrophilic surface imparted to an otherwise hydrophobic base substrate. The hydrophilic monomer, whether "(a)" or "(b)", is used in amounts sufficient to render the porous substrate wettable, as described herein. In some embodiments, the graft functionalized polymer will have a surface energy of at least 70 dyne/cm. The surface energy of a substrate may be measured using the Penetrating Drop method described herein, whereby a series of test solutions of increasing surface tension is applied to the samples until a solution of such high surface tension is used that it no longer penetrates the substrate. The surface tension of the previously used solution is then recorded as the surface energy of the substrate.

The "(a)" monomers that are grafted to the surface of the base substrates have both an (meth)acrylate group for grafting by gamma radiation, and an additional (meth)acrylate or a non-acrylate, free-radically polymerizable ethylenically unsaturated group for subsequent gamma radiation-initiated polymerization and crosslinking.

In many embodiments, acrylate groups are preferred for direct grafting of the monomer to the porous substrate surface due to the greater reactivity of such acrylates on exposure to gamma irradiation. However, not all such acrylate groups may be directly grafted (i.e. forming a covalent bond with the substrate by gamma radiation-initiated free radical polymerization); some may remain free and are subsequently incorporated into the growing polymer chain on exposure to gamma radiation. However, the longer lifetime of the radicals generated by the low flux of gamma radiation allows the use of less reactive methacrylate,monomers, which are more efficiently polymerized at slower rates and results in lower residual monomer content. Other ethylenically unsaturated groups, such as (meth)acrylamides, vinyl and vinyloxy groups, allyl and allyloxy groups, and acetylenic groups are less reactive during gamma irradiation, and are less likely to be directly grafted to the base substrate. Therefore a portion of such non-acrylate groups may be directly grafted to the substrate, but a portion remain unreacted, and are subsequently incorporated into the polymer chain during gamma radiation-initiated polymerization.

The "(a)" monomers may be directly grafted onto interstitial and outer surfaces of a porous base substrate to provide the requisite grafted ethylenically unsaturated groups via the acrylate group. These ethylenically unsaturated groups, in addition to the (meth)acrylate group, the free-radically polymerizable groups of monomer (a) are typically other ethylenically unsaturated groups such as a (meth)acrylamides, methacrylates, vinyl groups and acetylenic groups having reduced reactivity during grafting and are therefore free and unreacted for the subsequent gamma radiation-initiated polymerization and crosslinking.

With certain substrates, the (a) monomers may have a two ethylenically unsaturated, free-radically polymerizable groups, i.e. the monomer does not require an acrylate group for efficient graft polymerization. For example, PVDF or ECTFE substrates may be efficiently grafted with non-acrylate groups such as (meth)acrylamides, methacrylates, vinyl groups and acetylenic groups having reduced reactivity. In particular, PVDF or ECTFE substrates may be efficiently grafted with dimethacrylate monomers. It is believed that these substrates efficiently produce radicals on the surfaces thereof, and the extant radicals are sufficiently stable to react with the slower-reacting methacylates.

A second grafting monomer "(b)" may also be grafted to the surface of the substrate via an acrylate group, and may provide hydrophilic groups to the surfaces of the base substrate. In other embodiments the second monomer may have an ethylenically unsaturated group of reduced reactivity during the grafting step, but is subsequently incorporated by free radical polymerization during the gamma radiation-initiated polymerization. At least one of the monomers (a) and (b) is a hydrophilic monomer.

Useful grafting "(a)" monomers may have the generalized structure:

[CH₂=CR³-C(O)-O]ₐ-R²-Q-Z_{b}, I

where Z is an (meth)acrylate or non-(meth)acrylate, ethylenically unsaturated polymerizable group,
R³ is H or CH₃;
Q is a divalent linking group selected from a covalent bond "-", -O-, -NR¹-, -CO₂- and -CONR¹-, where R¹ is H or C₁-C₄ alkyl; and
R² is an alkylene group of valence a+b, and optionally containing one or more catenary oxygen atoms and/or one or more hydroxyl groups; and a and b are each at least one. Preferably the Z group is a (meth)acrylate that may be directly grafted to the substrate.

In certain embodiments, R² is a poly(alkylene oxide group) to provide the desired hydrophilicity, and is of the formula:

Z-Q-(CH(R¹)-CH₂-O)ₙ-C(O)-CR³=CH₂, II

wherein Z is a (meth)acrylate or non-(meth)acrylate, polymerizable ethylenically unsaturated group,
R³ is H or CH₃;
R¹ is a H or a C₁ to C₄ alkyl group, and n is from 2 to 100, preferably 5 to 20, and Q is a divalent linking group selected from a covalent bond "-", -O-, -NR¹- , -CO₂- and-CONR¹-, where R¹ is H or C₁-C₄ alkyl. Preferably the Z group is a non-acrylate of reduced reactivity that is incorporated into the polymer chain during gamma radiation-initiated polymerization.

In one embodiment, the poly(alkylene oxide) group (depicted as -(CH(R¹)-CH₂-Q)ₙ-) is a poly(ethylene oxide) (co)polymer. In another embodiment, the pendent poly(alkylene oxide) group is a poly(ethylene oxide-co-propylene oxide) copolymer. Such copolymers may be block copolymers, random copolymers, or gradient copolymers.

Suitable hydrophilic "(a)" monomers having a first (meth)acrylate group for grafting, a second ethylenically unsaturated group "Z" for subsequent gamma radiation-initiated polymerization and crosslinking include, but are not limited to, polyalkylene glycol (meth)acrylates including those derived from polyethylene glycol and polypropylene glycol (meth)acrylated monomers.

In another embodiment, the (a) monomer is a partially (meth)acrylated polyol, having at least one (meth)acrylate groups and at least one other ethylenically unsaturated polymerizable group may be selected from methacrylates, (meth)acrylamides, vinyl groups, vinyloxy, acetylenic groups, allyl and allyloxy groups. Such partially acrylated polyols may have one of more free hydroxyl groups.

Polyols useful in the present invention include aliphatic, cycloaliphatic, or alkanol-substituted arene polyols, or mixtures thereof having from about 2 to 18 carbon atoms and two to five, preferably two to four hydroxyl groups.

Examples of useful polyols include 1,2-ethanediol, 1,2-propanediol, 1,3-propanediol, 1,4-butanediol, 1,3-butanediol, 2-methyl-1,3-propanediol, 2,2-dimethyl-1,3-propanediol, 2-ethyl-1,6-hexanediol, 1,5-pentanediol, 1,6-hexanediol, 1,8-octanediol, neopentyl glycol, glycerol, trimethylolpropane, 1,2,6-hexanetriol, trimethylolethane, pentaerythritol, quinitol, mannitol, sorbitol, diethlene glycol, triethylene glycol, tetraethylene glycol, 2-ethyl-2-(hydroxymethyl)-1,3-propanediol, 2-ethyl-1,3-pentanediol, 1,4-cyclohexanedimethanol, 1,4-benzenedimethanol, and polyalkoxylated bisphenol A derivatives.

Most preferably "(a)" monomers are those di(meth)acrylates of glycerol having a free hydroxyl group (to provide hydrophilicity) and a methacrylate group such as 3-(acryloxy)-2-hydroxypropylmethacrylate (AcMac). Another useful "(a)" monomer is the reaction product of hydroxyethyl methacrylate and acrylic acid (or ester or acyl halide thereof).

In one exemplary embodiment, the grafted species result from the reaction of a polyethylene glycol (meth)acrylate monomer of Formula II with the base substrate upon exposure to a gamma radiation. These grafting monomers can be used to change a hydrophobic porous base substrate into a hydrophilic functionalized substrate due to the presence of the poly(alkylene oxide) group. The resulting hydrophilic substrate can have a number of desired properties such as instant wettability.

The "(a)" monomer is generally used in amounts of 1 to 25 wt.%, preferably 1 to 15 wt.%, most preferably 1 to 10 wt.% of the monomer solution.

The monomer solution may comprise one or more hydrophilic "(b)" monomer comprising at least one acrylate or other non-acrylate, ethylenically unsaturated group of reduced reactivity, and a hydrophilic group, such as an ionic group, for providing hydrophilicity to the substrate. If the "(a)" monomers do not confer hydrophilicity to the grafted polymer substrate, then the "(b)" monomers are present.

As used herein "hydrophilic monomers" are those polymerizable monomers having a water miscibility (water in monomer) of at least 1 wt.%, preferably at least 5 weight % without reaching a cloud point, and contain no functional groups that would retard the grafting polymerization.

Alternatively, hydrophilic monomers may be selected such that, when grafted to the substrate confer a "critical wetting surface tension" (CWST) of at least 10 dynes, preferably at least 15 dynes, greater than the ungrafted substrate. In certain preferred embodiments, the hydrophilic monomer as selected to increase the CWST to 70 dynes or greater. By "critical wetting surface tension" (CWST) is meant the mean value of the surface tension of a liquid that is absorbed into a porous medium and the slightly higher surface tension of a liquid that is not so absorbed. The surface energy of a substrate may be measured using the Penetrating Drop method described herein, whereby a series of test solutions of increasing surface tension is applied to the samples until a solution of such high surface tension is used that it no longer penetrates the substrate. The surface tension of the previously used solution is then recorded as the surface energy of the substrate.

The grafted copolymer may comprise 0 to 25 wt.% of such monomer units in the monomer solution. When present, the grafted polymer generally comprises 1 to 10 wt.% of such of such monomer units.

If the optional second "(b)" monomer contains a (meth)acrylate group, it may be directly grafted to the surfaces of the base substrate. If it contains a non-acrylate, ethylenically unsaturated group it will remain largely unreacted during the grafting step, where radicals are initiated on the surface of the substrate, but will be incorporated during the gamma radiation-initiated polymerization step from the radicals formed on the growing polymer chain. It will be understood that all or a portion of the (meth)acrylate groups may be directly grafted to the porous substrate, and a portion may be unreacted, but will be incorporated into the polymer upon gamma-irradiation. Conversely, a portion of other ethylenically unsaturated groups of reduced reactivity may be directly grafted, but such groups generally remain largely unreacted during the initial grafting step and are ultimately incorporated into the polymer upon continuing gamma radiation-initiated polymerization.

In some preferred embodiments, the ethylenically unsaturated groups of the "(a)" and "(b)" monomers are chosen to be efficiently copolymerizable with each other. That is, it is preferred that each of the "(a)" and "(b)" monomers have the same ethylenically unsaturated polymerizable groups.

The ionic groups of the hydrophilic "(b)" monomers may be neutral, have a positive charge, a negative charge, or a combination thereof. With some suitable ionic monomers, the ionic group can be neutral or charged depending on the pH conditions. This class of monomers is typically used to impart a desired hydrophilicity to the porous base substrate in addition to the second monomer.

In some embodiments the ionic monomers having a negative charge include (meth)acrylamidosulfonic acids of Formula III or salts thereof. 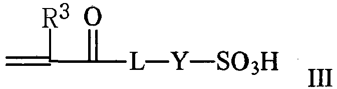 wherein, Y is a straight or branched alkylene (e.g. an alkylenes having 1 to 10 carbon atoms, 1 to 6 carbon atoms, or 1 to 4 carbon atoms), R³ is H or CH₃, and L is oxy or-NR¹-, where R¹ is H or C₁-C₄ alkyl. Exemplary ionic monomers according to Formula I include, but are not limited to, N-acrylamidomethanesulfonic acid, 2-acrylamidoethanesulfonic acid, 2-acrylamido-2-methyl-1-propanesulfonic acid, and 2-methacrylamido-2-methyl-1-propanesulfonic acid. Salts of these acidic monomers can also be used. Counter ions for the salts can be, for example, ammonium ions, potassium ions, lithium ions, or sodium ions. It will be understood with respect to Formula III that the grafting acrylate group may be replaced by another ethylenically unsaturated group of reduced reactivity for subsequent incorporation.

Other suitable ionic grafting monomers having a negative charge include sulfonic acids such as vinylsulfonic acid and 4-styrenesulfonic acid; (meth)acrylamidophosphonic acids such as (meth)acrylamidoalkylphosphonic acids (e.g. 2-(meth)acrylamidoethylphosphonic acid and 3-(meth)acrylamidopropylphosphonic acid; acrylic acid and methacrylic acid; and carboxyalkyl(meth)acrylates such as 2-carboxyethyl(meth)acrylate, and 3-carboxypropyl(meth)acrylate. Still other suitable acidic monomers include (meth)acryloylamino acids, such as those described in U.S. Patent No. 4,157,418 (Heilmann). Exemplary (meth)acryloylamino acids include, but are not limited to, N-acryloylglycine, N-acryloylaspartic acid, N-acryloyl-β-alanine, and 2-acrylamidoglycolic acid. Salts of any of these acidic monomers can also be used.

Some exemplary ionic grafting monomers that are capable of providing a positive charge are amino (meth)acrylates or amino (meth)acrylamides of Formula IV or quaternary ammonium salts thereof. The counter ions of the quaternary ammonium salts are often halides, sulfates, phosphates, nitrates, and the like. 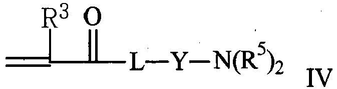 where L is oxy or -NR¹-, where R¹ is H or C₁-C₄ alkyl-; R³ is H or CH₃, and Y is an alkylene (e.g. an alkylene having 1 to 10 carbon atoms, 1 to 6, or 1 to 4 carbon atoms). Each R⁵ is independently hydrogen, alkyl, hydroxyalkyl (i.e. an alkyl substituted with a hydroxy), or aminoalkyl (i.e. an alkyl substituted with an amino). Alternatively, the two R⁵ groups taken together with the nitrogen atom to which they are attached can form a heterocyclic group that is aromatic, partially unsaturated (i.e. unsaturated but not aromatic), or saturated, wherein the heterocyclic group can optionally be fused to a second ring that is aromatic (e.g. benzene), partially unsaturated (e.g. cyclohexene), or saturated (e.g. cyclohexane).

It will be understood with respect to Formula IV that the grafting acrylate group may be replaced by another ethylenically unsaturated group of reduced reactivity, such as methacrylate, (meth)acrylamide, vinyl, vinyloxy, ally, alloxy, and acetylenyl for subsequent incorporation during gamma radiation-initiated polymerization.

In some embodiments of Formula IV, both R⁵ groups are hydrogen. In other embodiments, one R⁵ group is hydrogen and the other is an alkyl having 1 to 10, 1 to 6, or 1 to 4 carbon atoms. In still other embodiments, at least one of R⁵ groups is a hydroxy alkyl or an amino alkyl that have 1 to 10, 1 to 6, or 1 to 4 carbon atoms with the hydroxy or amino group being positioned on any of the carbon atoms of the alkyl group. In yet other embodiments, the R⁵ groups combine with the nitrogen atom to which they are attached to form a heterocyclic group. The heterocyclic group includes at least one nitrogen atom and can contain other heteroatoms such as oxygen or sulfur. Exemplary heterocyclic groups include, but are not limited to imidazolyl. The heterocyclic group can be fused to an additional ring such as a benzene, cyclohexene, or cyclohexane. Exemplary heterocyclic groups fused to an additional ring include, but are not limited to, benzoimidazolyl.

Exemplary amino acrylates (i.e. L in Formula IV is oxy) include N,N-dialkylaminoalkyl acrylates such as, for example, N,N-dimethylaminoethylacrylate, N,N-dimethylaminoethylacrylate, N,N-diethylaminoethyl acylate, N,N-diethylaminoethylacrylate, N,N-dimethylaminopropylacrylate, N,N-dimethylaminopropylacrylate, N-tert-butylaminopropylmethacrylate, N-tert-butylaminopropylacrylate and the like.

Exemplary amino (meth)acrylamides, that would be subsequently incorporated during the gamma radiation-initiated polymerization, (i.e. L in Formula IV is NR¹-) include, for example, N-(3-aminopropyl)methacrylamide, N-(3-aminopropyl)acrylamide, N-[3-(dimethylamino)propyl]methacrylamide, N-(3-imidazolylpropyl)methacrylamide, N-(3-imidazolylpropyl)acrylamide, N-(2-imidazolylethyl)methacrylamide, N-(1,1-dimethyl-3-imidazoylpropyl)methacrylamide, N-(1,1-dimethyl-3-imidazoylpropyl)acrylamide, N-(3-benzoimidazolylpropyl)acrylamide, and N-(3-benzoimidazolylpropyl)methacrylamide.

Exemplary quaternary salts of the ionic monomers of Formula IV include, but are not limited to, (meth)acrylamidoalkyltrimethylammonium salts (e.g. 3-methacrylamidopropyltrimethylammonium chloride and 3-acrylamidopropyltrimethylammonium chloride) and (meth)acryloxyalkyltrimethylammonium salts (e.g. 2-acryloxyethyltrimethylammonium chloride, 2-methacryloxyethyltrimethylammonium chloride, 3-methacryloxy-2-hydroxypropyltrimethylammonium chloride, 3-acryloxy-2-hydroxypropyltrimethylammonium chloride, and 2-acryloxyethyltrimethylammonium methyl sulfate).

Other monomers that can provide positively charged groups to the grafted polymer include the dialkylaminoalkylamine adducts of alkenylazlactones (e.g. 2-(diethylamino)ethylamine, (2-aminoethyl)trimethylammonium chloride, and 3-(dimethylamino)propylamine adducts of vinyldimethylazlactone) and diallylamine monomers (e.g. diallylammonium chloride and diallyldimethylammonium chloride).

In some preferred embodiments, the second, hydrophilic "(b)" monomer may have an (meth)acrylate group, or other ethylenically unsaturated groups of reduced reactivity, and a poly(alkylene oxide) group; e.g. mono(meth)acrylated poly(alkylene oxide compounds, where the terminus is a hydroxy group, or an alkyl ether group. Such monomers are of the general formula:

R¹-O-(CH(R¹)-CH₂-O)ₙ-C(O)-C(R¹)=CH₂, V,

wherein each R¹ is independently H or C₁-C₄ alkyl.

As described in further detail below, functionalized substrates of the present invention may be prepared using above-described monomers to provide hydrophilicity to the surface of a base substrate. When two or more of the above-described monomers are used to alter the surface properties of a porous base substrate, the monomers may be grafted onto the porous base substrate in a single reaction step (i.e. the two or more grafting monomers are all present upon exposure to gamma radiation) or in sequential reaction steps (i.e. a first grafting monomer "(a)" is present upon a first exposure to gamma radiation and a second grafting monomer "(b)" is present upon a second exposure to the gamma radiation). Similarly, all of such monomers (a) and (b) and may be present during a first grafting step and directly grafted, or subsequently incorporated during the gamma radiation-initiated polymerization. Alternatively, all or a portion of such monomers may be imbibed by the substrate in a first step, or in subsequent saturating steps.

The grafted polymer imparts a hydrophilic character to the functionalized substrate that contains a porous base substrate that has a hydrophobic character prior to surface modification. The hydrophilic character of the functionalized substrate results from the reaction of the porous base substrate with the "(a)" and "(b)" monomers that contain a hydrophilic group upon exposure to gamma radiation-initiated polymerization.

As previously described, all or a portion of the "(a)" monomers will be directly grafted to the substrate. Subsequently the additional "(b)" monomers may be subsequently incorporated: the additional monomer may be grafted via the pendent ethylenically unsaturated group of the "(a)" monomer. This may be illustrated with reference to Formula I where subsequently a hydrophilic "(b)" monomer of Formula V is subsequently incorporated during the gamma radiation-initiated polymerization: 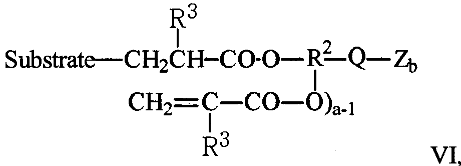 wherein
Z is an acrylate or non-acrylate, ethylenically unsaturated polymerizable group,
R³ is H or CH₃
Q is a divalent linking group selected from a covalent bond "-", -O-, -NR¹- , -CO₂- and -CONR¹-, where R¹ is H or C₁-C₄ alkyl; and
R² is an alkylene group of valence a+b and optionally containing one or more
catenary oxygen atoms and/or one or more hydroxyl groups; and a and b are each at least one. As will be understood, one of the acrylate groups of the "(a)" monomer is grafted to the surface of the substrate. Where the grafting "(a)" monomer has more than one acrylate group (subscript a of Formula I is 2 or more), the grafted monomer will have "a-1" pendent acrylate groups that may be further polymerized or crosslinking, and at least one ethylenically unsaturated "Z" groups for further polymerization with additional "(a)" and/or "(b)" monomers.

It will be further understood that the gamma radiation-initiated polymerization grafting process will yield a radical species, having a radical on the carbon alpha to the carbonyl of the hydrophilic monomer of Formulas I or II, that may further polymerize with one or more additional "(a)" and/or "(b)" monomers, resulting in a grafted polymers having these groups pendent from the polymer chain as simply illustrated below. The formation of grafted polymer chains significantly increases the density of the desired ligand groups, and the efficiency of binding.

Substrate-(M^{a})ₓ-M^{b})_{y}- VII

In the formula, the -(M^{a})- represent the residue of the grafted "(a)" monomers of Formulas I or II having "x" polymerized monomer units, where x is at least one and preferably at least two. The -(M^{b})_{y}, represents the polymerized "(b)" monomer (such as in Formulas III or IV), having y polymerized monomer units, where y may be zero and is preferably at least 1. At least one of said "(a)" and "(b)" monomers is hydrophilic. If an "(a)" monomer of Formula II is selected, the hydrophilic "(b)" monomers are optional. The subscripts x, and y correspond to the weight percents of each monomer unit, as previously described.

It will be understood, with respect to the grafted polymer of Formula VII, that the additional ethylenically unsaturated, free-radically polymerizable group of the "(a)" monomer may graft to the surface of the substrate, may crosslink the same or another polymer chain, or may serve as a point where an additional pendent polymer chain may grow. It will be further understood that the grafted polymer may be a random or block copolymer.

If the "(a)" monomer is not hydrophilic, then the "(b)" monomer is present to render the resulting polymer hydrophilic. The polymer may be random or block, and the "(a)" monomer, having two polymerizable groups (an acrylate and a "Z" group) may provide a crosslink between polymer chains. Any pendent unreacted (meth)acrylate or Z groups can serve as a point of polymerization with additional "(a)" or "(b)" monomers.

The above-described hydrophilic substrates may be prepared using a combination of process steps. The method comprises:
1) providing a base substrate, preferably a porous base substrate having interstitial and outer surfaces;
2) saturating the base substrate with a monomer solution comprising (a) at least one grafting monomer having at least one (meth)acrylate group and at least one additional ethylenically unsaturated, free-radically polymerizable group; and optionally (b) one or more additional monomers having at least one ethylenically unsaturated, free-radically polymerizable group and a hydrophilic group; and a chain transfer agent, wherein at least one of (a) and/or (b) monomers are hydrophilic. The saturating step may comprise a single solution or multiple solutions.
3) exposing the saturated porous base substrate to a controlled amount of gamma radiation so as to form a first functionalized substrate comprising grafted polymer attached to the surfaces of the base substrate.

With respect to the above-described method, the substrate may be saturated with a first solution comprising the "(a)" monomers and optionally the "(b)" monomers, subsequently exposed to gamma radiation to initiate graft polymerization, subsequent polymerization and crosslinking. Alternatively the method may comprise first saturating the base substrate with the "(a)" monomer, exposing the saturated substrate to gamma radiation to graft the "(a)" monomer to the surface of the substrate, subsequently saturating the grafted porous base substrate with a second monomer solution comprising the "(b)" monomers, then exposing the saturated substrate to gamma radiation to incorporate the "(b)" monomers to the substrate.

The monomer solution contains a chain transfer agent to control the molecular weight of the resultant polymer. They act to terminate the polymerization process for a forming polymer, causing the polymer to have a shorter chain length, and thus a lower molecular weight, than it might otherwise have. In general, the more chain transfer agent added, the lower the molecular weights of the resulting polymers.

It has been found that graft polymerization of the monomer mixture, in the absence of a chain transfer agent, may significantly reduce the flux. It is believed that microporous substrates, particularly those having an average pore size of less than about 0.8 microns, are plugged by the grafted polymer in the absence of a chain transfer agent. Generally the smaller the pores size of the microporous substrate, the better the flux rate after grafting. Such agents are not generally required for porous substrates having a pore size of greater than 0.8 microns.

Examples of useful chain transfer agents include but are not limited to those selected from the group consisting of carbon tetrabromide, alcohols, mercaptans, and mixtures thereof. The preferred chain transfer agents are alcohols such as isopropanol, isooctylthioglycolate and carbon tetrabromide. The monomer solution may comprise up to 0.5 parts by weight of a chain transfer agent, typically about 0.02 to about 0.15 parts by weight, preferably about 0.02 to about 0.1 parts by weight, most preferably 0.03 to about 0.07 parts by weight, based upon 100 parts by weight of the total monomer mixture. As the chain transfer agent is used to control the chain length of the grafted polymer, it may also be used in amounts such that the degree of polymerization is 2 to 250, preferably 10 to 100.

The monomer solution further comprises one or more organic solvents. The solvents should be chosen so that the monomers dissolve, and are non-reactive toward the substrate surface and the grafting monomers. Further, the solvents should not substantially swell the substrate. Useful solvent generally do not have a tertiary hydrogen atom that would retard polymerization. Examples of useful solvents (which are typically volatile organic compounds) added for this purpose include but are not limited to those selected from the group consisting of ketones, tertiary alcohols, ethers, esters, amides, hydrocarbons, chlorohydrocarbons, chlorocarbons, and mixtures thereof. These are usually stripped at the end of the reaction by vacuum heating.

Generally, the monomer solution comprises (a) 1 to 25 wt.%, preferably 1 to 10 wt.% of "(a)" monomers; (b) 0 to 25 wt.%, preferably 1 to 10 wt.% of hydrophilic "(b)" monomers, (c) up to 0.5 parts by weight of a chain transfer agent based upon 100 parts by weight of the total monomer mixture; and (d) solvent. The total concentration of monomers in the monomer solution can vary depending on a number of factors including, but not limited to, the grafting monomer or monomers in the monomer solution, the extent of grafting desired, the reactivity of the grafting monomer(s), and the solvent used. Typically, the total concentration of the monomers in the monomer solution ranges from about 1 wt.% to about 50 wt.%, desirably, from about 5 wt.% to about 30 wt.%, and more desirably from about 10 wt.% to about 20 wt.% based on a total weight of the monomer solution.

The process of preparing the grafted substrate comprises the steps of providing a base substrate, preferably a porous substrate having interstitial and outer surfaces; saturating the base substrate with a solution comprising (a) at least one grafting monomer having at least one (meth)acrylate group and at least one additional ethylenically unsaturated, free-radically polymerizable group; optionally (b) one or more additional monomers having at least one ethylenically unsaturated, free-radically polymerizable group and a hydrophilic group; and preferably a chain transfer agent, wherein at least one of "(a)", and "(b)" monomers are hydrophilic, exposing the saturated porous base substrate to a controlled amount of gamma radiation so as to form a first functionalized substrate comprising grafted polymer attached to the surfaces of the base substrate.

In the instant method, the substrate is saturated with the monomer solution prior to the irradiation step. Generally the irradiated substrate is saturated with the monomer solution immediately prior to the irradiation step. Generally the irradiated substrate is saturated within an hour, preferably within ten minutes. It has been observed that if the substrate is irradiated and then saturated with the grafting monomers, the performance of the grafted article is inferior to that article prepared by the instant method.

In the saturating step the substrate is contacted with the monomer solution containing one or more grafting monomers in the amounts previously described. Suitable methods of saturating include, but are not limited to, spray coating, flood coating, knife coating, Meyer bar coating, dip coating, and gravure coating.

The monomer solution remains in contact with the irradiated substrate for a time sufficient for the radical sites to initiate polymerization with the grafting monomers. When saturated with a solution of monomers, grafting reactions are mostly completed after 2-15 kGy exposure. As a result, the substrate comprises grafted polymers and/or copolymers attached to the surfaces of the substrate.

As discussed above, the monomer solution may comprise one or more grafting monomers suitable for grafting onto surfaces of the nonwoven substrate. Any of the exemplary grafting monomers described above can be included in solution. In addition to the described grafting monomers, the monomer solution can contain other materials such as, for example, one or more other non-grafting monomers, surfactants, dyes, pigments and solvents.

In the second step the substrate is exposed to gamma radiation in an inert atmosphere. Generally, the substrate is placed in a chamber purged of oxygen. Typically, the chamber comprises an inert atmosphere such as nitrogen, carbon dioxide, helium, argon, etc. with a minimal amount of oxygen, which is known to inhibit free radical polymerization. Alternatively, the sample may be vacuum sealed in another container or sandwiched between oxygen impermeable films. Preferably the sample is free of trapped gases.

The irradiation step comprises the ionizing irradiation of substrate surfaces with gamma radiation to prepare free radical reaction sites on such surfaces upon which the monomers are subsequently grafted. "Ionizing radiation" means radiation of a sufficient dose and energy to cause the formation of free radical reaction sites on the surface(s) of the base substrate. The radiation is of sufficiently high energy that when absorbed by the surfaces of the base substrate, energy is transferred to that substrate to result in the cleavage of chemical bonds in that support and the resultant formation of free radical sites on the substrate. One or more layers of substrates may be subjected to the ionizing radiation. The free radical sites generated on the surface of the substrate have average lifetimes ranging from several minutes to several hours and progressively decay to a zero concentration within about ten hours in the absence of the grafting monomer.

High-energy radiation doses are measured in kilograys (kGy). Doses can be administered in a single dose of the desired level or in multiple doses which accumulate to the desired level. Doses can range cumulatively from about 1 kGy to about 15 kGy. In some embodiments, the cumulative dose may exceed this value for substrates resistant to radiation damage.

In the irradiation step the substrate is exposed to a sufficient quantity of ionizing radiation, so as to form free radicals on the surfaces of the substrate. The chamber may contain at least one source capable of providing a sufficient dose of radiation. A single source is capable of providing a sufficient dose of radiation, although two or more sources and/or multiple passes through a single source, may be used.

Generally, the saturated substrate is purged (e.g. for two minutes or more) of air using nitrogen or another inert gas because oxygen inhibits free- radical polymerization. This purging can facilitate polymerization and high conversion in a desired period of time. A higher dose rate or a longer exposure time would be needed to achieve a similar degree of polymerization absent purging if a significant amount of oxygen were present. However, purging is not necessary when the substrate is isolated to exclude addition of oxygen during irradiation. For example, the substrate may be sandwiched between oxygen barrier films.

It has been found that gamma irradiation is a more efficient source than e-beam, and requires significantly lower doses. E-beam irradiation has a significantly higher flux rate as compared to gamma, and consequently a higher degree of radical termination. At the same doses, e-beam produces a much higher amount of non-grafted polymer.

In one embodiment, the entire saturated substrate is positioned in proximity to a gamma ray source. Preferably the saturated substrate is irradiated in a substantially uniform manner by either repositioning the source or material, or agitating the material during irradiation. In general, the dose rate in a gamma radiation source is determined by the source strength at the time of irradiation and the distance from the source to the target (e.g. saturated substrate).

Generally, suitable gamma ray sources emit gamma rays having energies of 400 keV or greater. Typically, suitable gamma ray sources emit gamma rays having energies in the range of 500 keV to 5 MeV. Examples of suitable gamma ray sources include cobalt-60 isotope (which emits photons with energies of approximately 1.17 and 1.33 MeV in nearly equal proportions) and cesium-137 isotope (which emits photons with energies of approximately 0.662 MeV). The distance from the source can be fixed or made variable by changing the position of the target or the source. The flux of gamma rays emitted from the source generally decays with the square of the distance from the source and duration of time as governed by the half-life of the isotope.

Once a dose rate has been established, the absorbed dose is accumulated over a period of time. During this period of time, the dose rate may vary if the saturated substrate is in motion or other absorbing objects pass between the source and sample. For any given piece of equipment and irradiation sample location, the dosage delivered can be measured in accordance with ASTM E-1702 entitled "Practice for Dosimetry in a Gamma Irradiation Facility for Radiation Processing". Dosimetry may be determined per ASTM E-1275 entitled "Practice for Use of a Radiochromic Film Dosimetry System" using GEX B3 thin film dosimeters.

Dose is the total amount of energy absorbed per mass unit. Dose is commonly expressed in kilograys (kGy). A Gray is defined as the amount of radiation required to supply 1 joule of energy per kilogram of mass. The total dose received by the saturated substrate depends on a number of parameters including source activity, residence time (i.e. the total time the sample is irradiated), the distance from the source, and attenuation by the intervening cross- section of materials between the source and sample. Dose is typically regulated by controlling residence time, distance to the source, or both.

The total dose received by the saturated substrate can affect the extent of polymerization and crosslinking. Generally, it is desirable to convert at least 80 wt.% of the "(a)" ; "(b)" monomers to polymer. Preferably, at least 95 wt.% of the "(a)" and "(b)" monomers are converted to polymer. The dose needed for polymerization depends on a variety of factors including, for example, the materials used in the saturated substrate, the desired properties, the presence or absence and amount of crosslinking agent, the presence and amount of chain transfer agent, the presence and amount of free radical inhibitors or free radical scavengers present, such as dissolved oxygen, and the desired properties.

Generally, it was found that doses in the range of about 1 to 15 kGy were suitable. In particular, it was found that doses of about 3 to 10 kGy at the dose rate used in the examples were sufficient to obtain hydrophilic polymer grafted substrates that were suitable for a wide range of applications. Total dose requirement for any given composition will vary as a function of the dose rate.

Higher dose rates typically result in faster chain termination and more ungrafted polymer formation. Thus, a dose rate can be selected based on desired properties for a specified composition. The dose rate is typically in the range of 0.0005 kGy/sec to 0.005 kGy/sec.

Once the saturated substrate has been irradiated to a desired dose, the substrate bearing grafted polymer groups may be optionally rinsed and/or heated. In the optional rinsing step, the functionalized nonwoven substrate is washed or rinsed one or more times to remove any unreacted monomers, ungrafted polymer, solvent or other reaction by-products. Typically, the functionalized substrate is washed or rinsed up to three times using a water rinse, an alcohol rinse, a combination of water and alcohol rinses, and/or a solvent rinse (e.g. acetone, methyl ethyl ketone, etc). When an alcohol rinse is used, the rinse may include one or more alcohols including, but not limited to, isopropanol, methanol, ethanol, or any other alcohol that is practical to use and an effective solvent for any residual monomer. In each rinse step, the functionalized substrate may pass through a rinse bath or a rinse spray.

In the optional drying step, the functionalized substrate is dried to remove any rinse solution. Typically, the functionalized substrate is dried in oven having a relatively low oven temperature for a desired period of time. Oven temperatures typically range from about 60°C to about 120°C, while oven dwell times typically range from about 120 to about 600 seconds. Any conventional oven may be used in the optional drying step. It should also be noted that in other embodiments the drying step can proceed before the rinsing step to eliminate volatile components before extraction of non-grafted residue. Following the optional drying step, the dried functionalized substrate can be taken up in roll form to be stored for future use

In one exemplary embodiment, a graft functionalized substrate is prepared by saturating a porous base substrate with a first solution comprising one or more grafting monomers and preferably a chain transfer agent in a solvent, wherein the one or more grafting monomers comprise at least one grafting "(a)" and optionally "(b)" monomers; and then exposing the porous base substrate saturated with the first solution to a controlled amount of gamma radiation so as to graft the "(a)" and "(b)" monomers to interstitial and outer surfaces of the porous base substrate.

In any of the above-described methods of making a functionalized substrate, any of the above-mentioned porous base substrates, grafting monomers, and reactants may be used to form a given functionalized substrate. The base substrate is often in the form of a porous membrane such as a microporous membrane, a nonwoven web, or porous fibers. In some embodiments, the porous base substrate comprises a hydrophobic microporous membrane formed by a thermally-induced phase separation (TIPS) method.

In one embodiment, the methods provide a porous article having a hydrophilic polymer grafted to the surface thereof comprising grafted polymerization reaction product of the recited monomers. The method of making a hydrophilic substrate alters the original hydrophobic nature of the porous base substrate, as the grafted polymer species include a hydrophilic group. In one embodiment, the grafting monomer having a first grafting acrylate group and a second non-grafting ethylenically unsaturated group may comprise hydrophilic groups, as illustrated in Formulas II-V and VII (supra).

For example, poly(alkylene oxide) compounds of Formula II or V can be used to impart a hydrophilic character to a hydrophobic porous base substrate. These grafting monomers have an acrylate group, a non-acrylate ethylenically unsaturated group and a hydrophilic polyalkylene glycol (i.e. polyalkylene oxide) group. Alternatively grafting monomers of Formula III or IV may be used which do not contain the hydrophilic polyalkylene glycol (i.e. poly(alkylene oxide)) group. In these instances, hydrophilicity is imparted using a second monomer, which may contain a grafting (meth)acrylate group or a non-acrylate ethylenically unsaturated group, and a hydrophilic group, such as a quaternary ammonium group.

The present invention enables the formation of functionalized substrates having many of the advantages of a hydrophobic porous bases substrate (e.g. a hydrophobic microporous membrane), but with permanent hydrophilicity on the surfaces of the functionalized substrate. The present invention reduces or eliminates many of the known problems associated with porous bases substrates formed from hydrophilic polymers including, but not limited to, hygroexpansive issues, reduced flux, mechanical weakness; and poor solvent, caustic and/or acidic resistance. The present invention also enables the formation of functionalized substrates having various degrees of hydrophilicity depending on the materials and steps used to form a given functionalized substrate.

The hydrophilic substrates of the present invention can exhibit various degrees of wettability upon exposure to various solutions or solvents. Wettability can often be correlated to the hydrophilic character of the hydrophilic substrate. As used herein, the term "instant wet" or "instant wettability" refers to the penetration of droplets of water into a given substrate as soon as the water contacts the substrate surface, typically within less than 1 second. For example, a surface wetting energy of about 70 dynes or larger usually results in instant wetting. As used herein, the term "no instant wet" refers to penetration of droplets of water into a given substrate but not as soon as the water contacts the substrate surface. As used herein, the term "no wetting" refers to the lack of penetration of droplets of water into a given substrate. For example, a surface wetting energy of about 60 dynes or less usually results in no wetting.

The hydrophilic porous membranes are particularly suited as filter media, such as the filter media found in water filtration devices. As the polymer is grafted to render it hydrophilic, the hydrophilicity is durable. In many water filtration media, such as filter cartridges, the filter media is cleaned or sanitized. The hydrophilic porous substrate described herein can be cleaned or sanitized and retain the hydrophilic properties as evidenced by the surface energy and wettability.

When used in a filtration application, one or more layers of the functionalized substrate may be used, each of which layers may have the same, or different average void or pore size, void volume, degree of polymer grafting, monomer composition of grafted polymer, porosity, tensile strength and surface area. In some embodiments, each subsequent layer may have a smaller pore size or smaller average fiber size so that finer contaminants may be filtered. The grafted substrate may be configured as planer or lenticular disks. In some embodiments the nonwoven substrate may be pleated. Pleated grafted nonwoven filter elements may be combined as multiple concentric pleated elements. The grafted nonwoven substrate may be wound spirally. Further, the grafted substrate may be encapsulated with a porous web to provide support and aid in handling. In filtration applications, the porous grafted substrate may be disposed either vertically, or horizontally.

In some embodiments the functionalized porous substrate may be combined with conventional filter elements, such as microporous membranes. In particular, a filter comprising one or more layers of the instant functionalized nonwoven substrate can serve as a "prefilter" for removing contaminants and or protecting downstream processing, including additional downstream filters.

Further, one or more layers of the grafted nonwoven substrate may be combined with one of more layers of other microporous membranes. For example one to five layers of grafted substrate may be combined with ungrafted microporous layer(s). Each layer of the grafted substrate may be the same or different. In some embodiments the layers may be the same, or may differ in terms of the particular substrate, thickness of the substrate, polymer used therein, fiber size, porosity, void volume, loft, tensile strength, surface area, grafting weight or density, degree of polymer grafting, and/or monomer concentration in the grafting polymer.

Examples of useful commercial membrane include LifeAssure™ or SterAssure™ cast nylon microporous membranes available from CUNO Inc., Meriden, Conn. Useful microporous membranes are disclosed in U.S. 6,413,070, 6,513,666, 6,776,940 and 6,264,044 (Meyering et al.,), U.S. 5,006,247 (Dennison et al.), U.S. 3,876,738 (Marinaccio et al.), U.S. 4,707,265,(Barnes et al.), and U.S. 4,473,474 (Ostreicher et al.), each incorporated by reference. Useful graft polymer functionalized microporous membranes are disclosed in PCT/US2008/088106, (WO 2009/086347).

In some embodiments, the grafted porous substrate is suited for the filtration of solutions used in the cleaning operations of semiconductor manufacturing. The cleaning steps are normally one of two types: oxidative and etch (or a combination of the two). During oxidative cleaning steps, oxidative compositions are used to oxidize the silicon or polysilicon surface, typically by contacting the wafer with aqueous peroxide or ozone solution. During etch cleaning steps, etching compositions are used to remove native and deposited silicon oxide films and organic contaminants from the silicon or polysilicon surface before gate oxidation or epitaxial deposition, typically by contacting the wafer with aqueous acid. See, for example, L. A. Zazzera and J. F. Moulder, J. Electrochem. Soc., 136, No. 2, 484 (1989). The ultimate performance of the resulting semiconductor chip will depend greatly on how well each cleaning step has been conducted. The cleaning solutions comprise an aqueous solution of hydrogen fluoride and ammonium fluoride known as a buffered oxide etch solution (BOE).

These BOE solutions must be filtered to remove particulate and/or colloidal contaminants such as silicates. However, the current commercial filters of a polyethersulfone with a hydrophilic coating are insufficiently durable under the harsh conditions. The graft functionalized porous substrates described herein overcome such durability problems. Further, the instant graft polymer functionalized porous substrates may be durable under other harsh filtration conditions such as solvents, strong acids, bases and oxidizing agents.

The polymer functionalized porous substrate is ideally suited for depth filter application, which captures contaminants within the medium, i.e. between an upstream surface and a downstream surface of the medium. The article provides a high media packing density in an adsorptive depth-type filter module which provides improved filtration efficiency. The article further provides increased surface area for a given media mass in an adsorptive depth-type filter module which provides higher flow rate (flux). Typically there is a trade-off between achieving these desirable filter characteristics of high efficiency and high flux. However the present functionalized nonwoven substrate provides a depth-type filter module that has high media packing density without sacrificing flux.

The present invention is described above and further illustrated below by way of examples, which are not to be construed in any way as imposing limitations upon the scope of the invention. On the contrary, it is to be clearly understood that resort may be had to various other embodiments, modifications, and equivalents thereof which, after reading the description herein, may suggest themselves to those skilled in the art without departing from the spirit of the present invention and/or the scope of the appended claims.

### Examples

### Materials

AA - Acrylic acid available from Alfa Aesar
AMPS - 2-acrylamido-2-methylpropane sulfonic acid available from Alfa Aesar
APTAC - acrylamidopropyl trimethylammonium chloride available from Sigma-Aldrich
MAPTAC methacrylamidopropyl) trimethylammonium chloride available from Sigma-Aldrich
PPG-DiMac - polyproylene glycol (400) dimethacrylate available from Sigma-Aldrich
Tris-AAM - N-[tris(hydroxymethyl)methyl] acrylamide available from Alfa Aesar
HacMac 2-(acryloyloxy) ethyl methacrylate available from Sartomer
EgMac - ethylene glycol dimethacrylate as SR 206 from Sartomer;
DiMac - polyethylene glycol (400) dimethacrylate, available as SR 603 from Sartomer
AcMac - 3-(acryloyloxy)-2-hydroxy-propyl methacrylate available from Sigma-Aldrich
DiAc- Polyethylene glycol diacrylate, molecular weight -400, available as SR-344 from Sartomer
IPA - isopropanol, from various suppliers
IOTG - isooctyl thioglycolate available from TCI

### Water Flux Test

Water flux was determined by placing a disk of the test film having a diameter of approximately 47 millimeters (1.85 inches) in a Model 4238 Pall Gelman magnetic filter holder (available from Pall Corp., East Hills, NY). The filter holder was then placed on a filter flask that was attached to a vacuum pump. A vacuum gauge was used to monitor the vacuum. Approximately 150 milliliters of water was placed in the filter holder and then vacuum was applied. When all of the remaining water had passed through the film, timing was stopped and the time required to pass 100 milliliters of water through the known membrane area at the known pressure of 21 inches of mercury (533 mm Hg) was recorded. The water flux was then expressed in units of L/(m²-h-kPa).

### CWST - Penetrating Drop Method:

The critical wetting surface tension of the samples may be measured using Dyne Test Solutions™ available from Jemmco LLC., Mequon WI 53092 (general test method disclosed in Journal of Membrane Science, 33(1987) 315-328 Wetting Criteria For The Applicability of Membrane Distillation). A series of test solutions of increasing surface tension is applied to the samples until a solution of such high surface tension is used that it no longer penetrates the substrate. The surface tension of the previously used solution is then recorded as the surface energy of the substrate.

### Pore Size

The bubble point pore size was measured using a forward flow bubble point pressure apparatus, which is effective for measuring the bubble point pore sizes of both symmetric and 2-zone membranes. A disc of each membrane was saturated with a mixture of 60 wt % isopropyl alcohol and 40 wt % water and mounted in a 90-mm diameter membrane holder. For 2-zone membranes, the zone having the larger average pore size (denoted as zone A) was situated on the upstream side of the holder, while the zone having the smaller average pore size (denoted as zone B) was situated on the downstream side of the holder. A pressure controller (Type 640, available from MKS Instruments, Inc.) regulated the supply of nitrogen gas to the upstream side of the membrane. The mass flow of gas downstream of the membrane was measured using a mass flow meter (Mass-Flo™ meter, model no. 179A12CS3BM, available from MKS Instruments, Inc.).

At the beginning of the test, nitrogen gas was supplied to the upstream side of the membrane at a pressure of 10.3 kPa (1.5 psi). The pressure was then increased by increments of 1.38 kPa (0.2 psi) every 0.2 s. For symmetric membranes, this resulted in a measured mass flow, downstream of the membrane, initially roughly constant at a value representative of the rate of diffusional flow of nitrogen through the liquid-filled pores of the membrane, followed by a monotonic increase in the measured mass flow as liquid was displaced from the membrane pores. For 2-zone membranes, this resulted in a measured mass flow, downstream of the membrane, initially roughly constant at a value representative of the rate of diffusional flow of nitrogen through the liquid-filled pores of the membrane, followed by a temporary increase in the measured mass flow as liquid was displaced from the larger pores of zone A, followed by a return to a low mass flow representative of the rate of diffusional flow of nitrogen through the liquid-filled pores of zone B, followed by a monotonic increase in the measured mass flow as liquid was displaced from the pores of zone B. For symmetric membranes, the bubble point pressure of the membrane was taken as the applied nitrogen pressure at the onset of the monotonic increase in measured mass flow. For 2-zone membranes, the bubble point pressure of zone A was taken as the applied nitrogen pressure at the onset of the first increase in measured mass flow, and the bubble point pressure of zone B was taken as the applied nitrogen pressure at the onset of the second (monotonic) increase in measured mass flow. The bubble point pressure of a membrane, or of a zone of a 2-zone membrane, is inversely related to the largest pore size in the pore size distribution, or the bubble point pore size, according to the Laplace equation.

### Pore Size

The porosity, or percentage void volume, of a substrate was measured as follows. A sample of the substrate having a known area and thickness was prepared and weighed. The percentage void volume (porosity) was then calculated based on the known mass and volume of the sample and the known density of the material used to make the substrate (e.g. 0.905 g/cm3 for polypropylene, 1.78 g/cm3 for PVDF).

### Air Permeability Test

The air permeabilities of substrates were measured using a Gurley Densometer (Model 4110N Genuine Gurley™ Densometer available from Gurley Precision Instruments, Troy, NY), which measures the time required for a 50 cm³ volume of air to flow through a standard area of the substrate under light, uniform pressure as detailed in ASTM D-726-58.

### Irradiation procedure -E-beam

For comparative purposes, samples were prepared and grafted using electron-beam irradiation in place of gamma. Electron beam irradiation was carried out using a ESI CB-300 Electrocurtain electron beam system, obtained from Energy Sciences, Inc., Wilmington, MA. The film samples were placed between two sheets of poly(ethylene terephthalate) (PET) film for the irradiation.

The following procedure was adhered to unless otherwise specified. Samples of film were placed between two larger area size pieces of 102 micron (4-mil) thick PET and taped together at one end. This sandwich was then opened and the sample film was wetted with monomer solution and the sandwich reclosed. Trapped air bubbles were removed and excess liquid was squeezed out by applying a rubber roller over the surface of the sandwich. The sandwich was conveyed through the electron beam processor at a speed of 20 fpm and at a voltage of 300 keV with sufficient beam current applied to the cathode to deliver the targeted dose. The beam was calibrated using thin film dosimeters, calibrated and traceable to a national standards laboratory (RISØ, Denmark). In some cases, to lower the overall dose rate and increase residence time while under the beam, the dose was fractionated by multiple passes through the beam to simulate a longer exposure time more characteristic of electron beams with cathodes extended in the web direction (i.e. BroadBeam, etc).

### Irradiation procedure -Gamma.

Generally the samples were saturated with grafting monomer solution and sandwiched between sheets of 102 micron (4-mil) thick PET, clamped into frames and held in a container until irradiation. In some examples a paper towel was wetted with a small amount of methanol (ca. 15 mL) and placed in the container to reduce evaporative losses. The container was flushed with nitrogen in a glove box before sealing. It was found the saturated and sandwiched membranes remained wet and suitable for irradiation for at least 5 days.

The irradiation with gamma rays was accomplished using a Panoramic Wet Source Storage Irradiator (either NDS Nordion JS-7500 or JS-10000) having a source strength of 1.5 to 3 MCi consisting of a series of hollow stainless steel tubes containing Co-60. Generally, the off-line carrier was used to targer specific doses. Mid-way through the dose exposure of multiple samples, the samples were retrieved from the irradiation chamber, and the relative position reversed to provide a more uniform exposure, the samples were conveyed into the irradiation chamber and exposed to gamma rays for periods of time necessary to achieve the desired dose. Total absorbed doses ranged from 2 to 12 kGy and dose rates were about 0.0005 to 0.005 kGy/sec.

### Example 1. Determination of the minimum grafting dose.

A sample of a thermally induced phase separation (TIPS) microporous polypropylene film was prepared using the method described in U.S. 4,726,989 (Mrozinski). The TIPS film had the following properties: about 114 microns (4.5 mils) thick, Gurley (air flow) about 6 s/50 cm³ air with an pore size range of about 0.44 to 0.8 microns, has a surface wetting energy of about 35 dynes/cm (using JEMMCO LLC solutions for the penetrating drop method) and has a water flux of 188 L/(m²-h-kPa).

47 mm diameter disks of this membrane were saturated with a solution of 10% DiAc and 90% methanol and sandwiched between two layers of 102-micron (4-mil) thick PET. Each assembly was placed within a Ziploc bag that was flushed with nitrogen before sealing. These were placed within another, larger Ziploc bag that was also flushed with nitrogen before sealing. The samples were conveyed into the gamma irradiation chamber and were progressively withdrawn at cumulative dose levels of 1.6, 2.8, 5.3, 8.1, 12.1 and 15.4 kGy. After irradiation, each sample was rinsed, dried and tested for hydrophilicity by placing a drop of water on the surface and observing if the water spread and was drawn into the pores. At a dose of 1.5 kGy, the polypropylene membranes were not hydrophilic but at a dose of 2.8 kGy (and higher), they were instantly wettable.

### Example 2 A, B and C. Preparation of hydrophilic PP membranes.

For Examples 2 A, B and C the substrate was an asymmetric thermally induced phase separation (TIPS) microporous polypropylene film, prepared using the method described in U.S. 4,726,989, and copending U.S.S.N. 61/142056 (Mrozinski). The TIPS film had the following properties: about 144 microns (4.5 mils) thick, Gurley (air flow) about 6 sec/50 cm³ air with a bubble point pore size of about 0.8 microns, a surface wetting energy of about 35 dynes/cm (using the penetrating drop method) and a water flux of 188 L/(m²-h-kPa).

Three polypropylene TIPS membranes were saturated in a 90% methanol solution with a total monomer concentration set at 10% for each of the three samples. Example 2A's monomer was 10% DiAc. Example 2B's monomer was 5% DiAc and 5% DiMac. Example 2C's monomer was 10% DiMac.

The saturated membranes were sandwiched between sheets of 102-micron (4-mil) PET and clamped into frames. The samples were conveyed into the irradiation chamber and exposed to gamma rays for periods of time necessary to achieve a dose of about 7.5 kGy. The samples were then washed in water and dried.

The hydrophilicity was tested by the Penetrating Drop method. The durability of the hydrophilicity was tested by exposing the membranes to a steam autoclave at 121 °C for one hour and also by exposing the membranes to 0.625 N NaOH for five hours at 60 °C. The results are summarized in Table 1. Example 2C was repeated at a dose as high as 10 kGy and the sample still remained hydrophobic. It is believed that while the DiMac monomer is not as efficient as an acrylate monomer in rendering the polypropylene substrate hydrophilic, it imparts a more durable hydrophilicity.

**Table 1**

| **Example** | **DiAc** | **DiMac** | **Hydrophilic ?** | **Hydrophilic after Steam ?** | **Hydrophilic after NaOH?** |
|---|---|---|---|---|---|
| 2A | 10% | - | Yes | Yes | No |
| 2B | 5% | 5% | Yes | Yes | Yes |
| 2C | - | 10% | Yes | Yes | Yes |

### Example 3 A,B,C and D.

Samples 3A, B and C used a microporous poly(vinylidine fluoride) (PVDF), about 5 mils thick (-127 micrometers), 72% void volume, Gurley (air flow) about 4.5 sec/50cc, 1.9 micron bubble point pore size (largest effective pore size) and a water flux of about 470 L/(m²-h-kPa), which was prepared using the general procedure described in U.S. 7,338,692 (Smith et al.), incorporated herein by reference. Sample D used the same microporous polypropylene membrane as Example 1.

The monomer solutions were as follows:

| | |
|---|---|
| 3A | 10% DiMac in methanol |
| 3B | 20% DiMac in methanol |
| 3C | 10% DiMac plus 2% AcMac |
| 3D | 10% PEGDMA plus 2% AcMac |

Each sample received a dose of about 4 kGy, waswashed three times in water and dried. The samples A, C and D were hydrophilic (having a surface wetting energy of ≥ 72 dynes/cm by the Penetrating Drop method). For Sample "(b)", with a monomer concentration of 20% PEGDMA, it appeared that the pores were plugged. Microporous sample A, grafted with the methacrylate functional DiMac, indicates that an acrylate functional group is not necessary to graft substrates such as poly(vinylidine fluoride). However polypropylene samples were more efficiently grafted with the acrylate functional DiAc, or AcMac than with the methacrylate functional DiMac.

### Comparative Example 4. - 10 kGy E-beam dose.

The microporous asymmetric polypropylene film described in Example 2 was saturated with a solution containing 10% DiMac sandwiched between sheets of 102-micron (4-mil) thick PET and clamped into frames. The sample was irradiated with E-beam at a dose of 7.5 kGy, then washed with water three times, and dried. After drying, the porous film was not spontaneously water wettable. The surface wetting energy was found to be 39 dynes/cm by the Penetrating Drop method. Very little grafting was accomplished with E-beam alone at this dose level with the slow monomer.

### Comparative Examples 5A, and B- 20 kGy E-beam dose.

Example 5A was performed as in Example 4 except the sample was irradiated at 20 kGy instead of 7.5 kGy was saturated with a monomer solution that contained 10% DiMac. The sample after drying was not spontaneously wettable with water, indicating insufficient grafting, even at a higher dose of E-beam radiation to make the film hydrophilic.

Example 5B was made like Example 5A except that 2% AcMac was added to the coating solution. The sample after drying was not spontaneously wettable with water, meaning not enough grafting was accomplished, even at a higher dose of E-beam radiation and with added AcMac.

### Example 6 A, B, C Minimum monomer concentration for grafting.

Three samples of the microporous polypropylene film described in Example 1 were saturated with 5%, 7.5%, and 10%, respectively, solutions of DiAc and methanol, sandwiched between two layers of 102 micron (4-mil) PET and clamped into a frame. The films were gamma-irradiated to about 5 kGy. Sample 6A failed to wet with water, sample 6B had spotty wetting and Sample 6C exhibited instant wetting with water on PP microporous films.

### Example 7

A sample of asymmetric thermally induced phase separation (TIPS) microporous polypropylene film described in Example 2 was saturated with a solution of 5% DiAc, 5% DiMac and 90% MeOH, allowed to dry and clamped on a frame. Another piece of the same film was also saturated with the same solution but not allowed to dry. The saturated film was placed between two sheets of PET liner with excess solution pressed out, then clamped in a frame. Both samples were purged of air prior to gamma irradiation at a dose of about 6.5 kGy.

The film that was allowed to dry before irradiation was not hydrophilic after washing and drying. Using the penetrating drop method, the surface wetting energy was found to only be about 36 dynes/cm. The film having the methanol still in the pores was instantly wettable with water (indicating the surface wetting energy is at or above 70 dynes/cm). The results suggest solvent is necessary for adequate monomer diffusion to grafting sites.

### Example 8A-I

Monomer solutions were prepared using the weight percentages listed in Table 2. The chain transfer agent (IPA or IOTG) was added in the indicated volume-percent of the pre-mixed monomer/methanol solution. The membrane was an asymmetric microporous polypropylene membrane having two through-thickness zones of different average pore size. The membrane had a total caliper of 231 µm (9.1 mil), a zone A bubble point pore size of 2.15 µm, a zone B bubble point pore size of 0.86 µm, a Gurley (air flow) of 2.2 s/50 cm³ air, and a water flux of 476 L/(m²-h-kPa).

The indicated grafting solution was saturated by the polypropylene membrane sample of about 13x18 cm, which was sandwiched between two larger sheets of 102 micron (4 mil) thick polyethylene terephthalate (PET). Excess monomer solution was added using disposable pipettes and the excess was removed by squeezing the sandwiched constructions with a hand roller. The membrane sandwich and clamped into frames. The samples were conveyed into the irradiation chamber and exposed to gamma rays for periods of time necessary to achieve a dose of about 6 kGy. The samples were then washed in water and dried. The results of the testing are shown in Table 2. The column for "relative water flux" lists that fraction relative to the ungrafted control sample; e.g. Example 8b has a 43% water flux relative to Comparative Example 8A. As can be seen in Table 2, the addition of the chain transfer agent IOTG greatly improves the flow properties of the hydrophilic membranes. No further improvement is seen beyond 0.01 % IOTG.

**Table 2**

| | | | | | |
|---|---|---|---|---|---|
| | Grafting Chemistry | | | | |

| Example | DIMAC | ACMAC | IOTG | Water Flux | Relative Water |
|---|---|---|---|---|---|
| | (wt. %) | (wt. %) | (vol. %) | (L/m²-h-kPa) | Flux |
| Comp 8A | 0% | 0% | 0.00% | 848 | 100% |
| 8b | 4% | 4% | 0.00% | 364 | 43% |
| 8C | 4% | 4% | 0.01% | 683 | 81% |
| 8D | 4% | 4% | 0.03% | 673 | 79% |
| 8E | 4% | 4% | 0.06% | 674 | 79% |
| 8F | 8% | 4% | 0.00% | 364 | 43% |
| 8G | 8% | 4% | 0.01% | 462 | 54% |
| 8H | 8% | 4% | 0.03% | 462 | 54% |
| 8I | 8% | 4% | 0.06% | 494 | 58% |

### Example 9A-J

In the Following Examples, the same basic procedure was used as in Examples 8A-I with the indicated amounts of the monomers shown in Table 3, and isopropanol (IPA) as the chain transfer agent.

**Table 3**

| | Grafting Chemistry | | | | |
|---|---|---|---|---|---|
| Example | DIMAC | ACMAC | IPA | Water Flux | Fraction of Neat Water |
| | (wt.%) | (wt.%) | (vol. %) | (L/m²-h-kPa) | Flux |
| 9A | 0% | 0% | 0.00% | 848 | 100% |
| 9B | 4% | 4% | 0.00% | 364 | 43% |
| 9C | 4% | 4% | 0.01% | 619 | 73% |
| 9D | 4% | 4% | 0.03% | 684 | 81% |
| 9E | 4% | 4% | 0.04% | 702 | 83% |
| 9F | 4% | 4% | 0.06% | 727 | 86% |
| 9G | 4% | 4% | 0.06% | 695 | 82% |
| 9H | 4% | 4% | 0.08% | 717 | 85% |
| 9I | 4% | 4% | 0.10% | 695 | 82% |
| 9J | 4% | 4% | 0.12% | 676 | 80% |

### Examples 10A-F

In the Following Examples, the same basic procedure was used with the indicated amounts of the monomers shown in Table 3, with IPA as the chain transfer agent. The substrate was an ECTFE microporous substrate having thickness of 48 microns (1.9 mils), a bubble point pore size of 0.2 microns, and a water flux of 16.5 L/(m²-h-kPa). As can be seen from the results of table 4, ECTFE membrane with very little CTA shows poor water flux, as indicated by Example 10B. Addition of at least 0.04% IPA to the same basic monomer mix leads to a 25-fold improvement in flow and, in terms of water flux, renders the hydrophilic membrane virtually indistinguishable from its unmodified, hydrophobic parent.

**Table 4**

| ECTFE | Grafting Chemistry | | | | | |
|---|---|---|---|---|---|---|
| Example | DiMac | AcMac | IPA | Surface Tension | Water Flux | Fraction of Neat Water Flux |
| | (wt.%) | (wt. %) | (vol.%) | (dyne/cm) | (L/m²-h-kPa) | |
| 10A | 0% | 0% | 0.00% | 31 | 17.8 | 100% |
| 10B | 4% | 4% | 0.01% | 83 | 0.7 | 4% |
| 10C | 4% | 4% | 0.03% | 75 | 14.6 | 82% |
| 10D | 4% | 4% | 0.04% | 86 | 17.8 | 100% |
| 10E | 4% | 4% | 0.06% | 85 | 17.8 | 100% |
| 10F | 4% | 4% | 0.08% | 83 | 17.8 | 100% |

### Examples 11A-AB

In the Following Examples, the same basic procedure was used with the indicated monomers (in methanol) and in the amounts thereof shown in Table 5. The Examples were run to assess the critical water surface tension (CWST), and durability thereof, when exposed to SCI cleaning fluid. No chain transfer agent was used as the relative flux was not tested. The substrate was an ECTFE microporous substrate having thickness of 48 microns (1.9 mils), a bubble point pore size of 0.2 microns, and a water flux of 16.5 L/(m²-h-kPa).

After gamma radiation-initiated grafting and rinsing to record the initial CWST, the graft polymer functionalized membrane was exposed to the SCI cleaning solution at 80 °C for five days, and the CWST remeasured. The SCI cleaning solution was prepared by combining 1 part NH₄OH, 1 part H₂O₂ and 5 parts water.

The Results are reported in Table 5.

**Table 5**

| Example | Monomer (a) (wt. %) | Monomer (b) (wt. %) | Initial CWST (dynes) | Final CWST (dynes) |
|---|---|---|---|---|
| 11A (Comparative) | none | none | 39 | |
| 11B (Comparative) | none | AA (5%) | 40 | |
| 11C (Comparative) | none | AA (15%) | 45 | 38 |
| 11D (Comparative) | none | AMPS 5%) | 39 | |
| 11E | none | DiMac (5%) | 49 | |
| 11F | none | DiMac (5%) | 80 | 68 |
| 11G (Comparative) | none | MAPTAC (10%) | 40 | 40 |
| 11H | none | PPG DiMac (5%) | 45 | |
| 11I | none | PPG DiMac (10%) | 49 | 55 |
| 11J | none | PPG DiMac (15%) | 49 | |
| 11K (Comparative) | none | Tris-AAM (5%) | 44 | |
| 11L (Comparative) | none | Tris-AAM (10%) | 49 | |
| 11M | HacMac (3.5%) | DiMac (4%) | 72 | 73 |
| 11N | HacMac (5%) | Tris-AAM (5%) | 86 | |
| 11O | EgMac (5%) | AA (5%) | 70 | |
| 11P | EgMac (3.7%) | DiMac (4%) | 75 | 70 |
| 11Q | EgMac (5%) | Tris-AAM (5%) | 86 | 75 |
| 11R | AcMac (15%) | AA (15%) | 83 | 40 |
| 11S | AcMac (5%) | AMPS (5%) | 82 | 42 |
| 11T | AcMac (10%) | ApTac (10%) | 82 | |
| 11U | AcMac (10%) | MapTac (10%) | 82 | 43 |
| 11V | AcMac (10%) | PPG DiMac (10%) | 72 | 70 |
| 11W | AcMac (10%) | Tris-AAM (10%) | 79 | 36 |
| 11X | HacMac (20%) | none | 83 | 74 |
| 11Y | EgMac (15%) | none | 71 | |
| 11Z | EgMac (20%) | none | 78 | 80 |
| 11AA | AcMac (10%) | none | 63 | |
| 11AB | AcMac (20%) | None | 81 | 73 |

## Claims

1. A method of making a functionalized substrate, the method comprises the steps of:
1) providing a porous base substrate having interstitial and outer surfaces;
2) saturating the porous base substrate with a first solution comprising (a) at least one grafting monomer having at least one (meth)acrylate group and at least one additional ethylenically unsaturated, free-radically polymerizable group; and optionally (b) one or more additional monomers having at least one ethylenically unsaturated, free-radically polymerizable group and a hydrophilic group; and a chain transfer agent, wherein at least one of (a), and/or (b) monomers are hydrophilic.
3) exposing the saturated porous base substrate to a controlled amount of gamma radiation so as to form a first functionalized substrate comprising grafted polymer attached to the surfaces of the porous base substrate.

2. The method of claim 1, wherein the monomer (a) comprises a poly(alkylene oxide) diacrylate.

3. The method of claim 1 wherein said monomers (a) having at least one grafting monomer having at least one (meth)acrylate group and at least one additional ethylenically unsaturated, free-radically polymerizable group comprises a first (meth)acrylate group for grafting to said porous base substrate and a second methacrylate group for subsequent polymerization with (a) and/or (b) monomers.

4. The method of claim 1, wherein said first solution comprises (b) one or more additional monomers having a free-radically polymerizable group and a hydrophilic group.

5. The method of claim 1 wherein the monomer solution comprises:
(a) 1 to 10 wt.% of (a) monomers;
(b) 1 to 10 wt.% of (b) monomers,
(c) 0.02 to 0.15 wt.% of chain transfer agent; and
(e) solvent.

6. The method of claim 1 wherein said "(a)" monomers are of the formula:
Z-Q-(CH(R¹)-CH₂-O)ₙ-C(O)-CR³=CH₂, II
wherein Z is an acrylate or non-acrylate, polymerizable ethylenically unsaturated group,
R³ is H or CH₃
R¹ is a H or a C₁ to C₄ alkyl group, and n is from 2 to 100, and Q is a divalent linking group selected from a covalent bond "-", -O-, -NR¹- , -CO₂- and - CONR¹, where R¹ is H or C₁-C₄ alkyl.

7. An article comprising a porous base substrate having interstitial and outer surfaces and grafted polymer extending from the surfaces of the porous base substrate, the polymer comprising interpolymerized monomer units of:
(a) at least one grafting monomer having at least one (meth)acrylate group and at least one additional ethylenically unsaturated, free-radically polymerizable group; optionally (b) one or more additional monomers having at least one ethylenically unsaturated, free-radically polymerizable group and a hydrophilic group; (c) a chain transfer agent; and
wherein at least one of (a), and/or (b) monomers are hydrophilic; and wherein the average degree of polymerization of said polymers is 2 to 250.

8. The article of claim 7 further comprising grafted hydrophilic groups extending from the surfaces of the porous base substrate.

9. The article of claim 7 wherein the polymer comprised grafted poly(alkylene oxide) diacrylate.

10. The article of claim 7 wherein the porous base substrate is an ethylene-trichlorofluoroethylene (ECTFE) porous base substrate.

## Patentansprüche

1. Verfahren zur Herstellung eines funktionalisierten Substrats, bei dem man:
1) ein poröses Basissubstrat mit interstitiellen und äußeren Oberflächen bereitstellt;
2) das poröse Basissubstrat mit einer ersten Lösung, umfassend (a) mindestens ein Pfropfmonomer mit mindestens einer (Meth)acrylatgruppe und mindestens einer zusätzlichen ethylenisch ungesättigten, radikalisch polymerisierbaren Gruppe und gegebenenfalls (b) ein oder mehrere zusätzliche Monomere mit mindestens einer ethylenisch ungesättigten, radikalisch polymerisierbaren Gruppe und einer hydrophilen Gruppe und ein Kettenübertragungsmittel, sättigt, wobei mindestens eines der Monomere (a) und/oder (b) hydrophil ist;
3) das gesättigte poröse Basissubstrat einer gesteuerten Menge von Gamma-Strahlung ausgesetzt, so dass sich ein erstes funktionalisiertes Substrat, umfassend an die Oberflächen des porösen Basissubstrats gebundenes Pfropfpolymer, bildet.

2. Verfahren nach Anspruch 1, bei dem das Monomer (a) ein Poly(alkylenoxid)diacrylat umfasst.

3. Verfahren nach Anspruch 1, bei dem die Monomere (a) mit mindestens einem Pfropfmonomer mit mindestens einer (Meth)acrylatgruppe und mindestens einer zusätzlichen ethylenisch ungesättigten, radikalisch polymerisierbaren Gruppe eine erste (Meth)acrylatgruppe zum Aufpfropfen auf das poröse Basissubstrat und eine zweite Methacrylatgruppe zur anschließenden Polymerisation mit Monomeren (a) und/oder (b) umfassen.

4. Verfahren nach Anspruch 1, bei dem die erste Lösung (b) ein oder mehrere zusätzliche Monomere mit einer radikalisch polymerisierbaren Gruppe und einer hydrophilen Gruppe umfasst.

5. Verfahren nach Anspruch 1, bei dem die Monomerlösung
(a) 1 bis 10 Gew.-% Monomere (a);
(b) 1 bis 10 Gew.-% Monomere (b);
(c) 0,02 bis 0,15 Gew.-% Kettenübertragungsmittel und
(e) Lösungsmittel
umfasst.

6. Verfahren nach Anspruch 1, wobei die Monomere "(a)" die Formel:
Z-Q-(CH(R¹)-CH₂-O)ₙ-C(O)-CR³=CH₂, II
aufweisen, wobei Z für eine polymerisierbare ethylenisch ungesättigte Acrylat- oder Nichtacrylatgruppe steht,
R³ für H oder CH₃ steht,
R¹ für H oder eine C₁- bis C₄-Alkylgruppe steht und n für 2 bis 100 steht und Q für eine zweiwertige Brückengruppe steht, die aus einer kovalenten Bindung "-", -O-,-NR¹-, -CO₂- und -CONR¹ ausgewählt ist, wobei R¹ für H oder C₁-C₄-Alkyl steht.

7. Gegenstand, umfassend ein poröses Basissubstrat mit interstitiellen und äußeren Oberflächen und von den Oberflächen des porösen Basissubstrats abstehendes Pfropfpolymer, wobei das Polymer interpolymerisierte Monomereinheiten von:
(a) mindestens einem Pfropfmonomer mit mindestens einer (Meth)acrylat-gruppe und mindestens einer zusätzlichen ethylenisch ungesättigten, radikalisch polymerisierbaren Gruppe; gegebenenfalls (b) einem oder mehreren zusätzlichen Monomeren mit mindestens einer ethylenisch ungesättigten, radikalisch polymerisierbaren Gruppe und einer hydrophilen Gruppe und (c) einem Kettenübertragungsmittel
umfasst; und
wobei mindestens eines der Monomere (a) und/oder (b) hydrophil ist und wobei der durchschnittliche Polymerisationsgrad der Polymere 2 bis 250 beträgt.

8. Gegenstand nach Anspruch 7, ferner umfassend aufgepfropfte hydrophile Gruppen, die von den Oberflächen des porösen Basissubstrats abstehen.

9. Gegenstand nach Anspruch 7, wobei das Polymer aufgepfropftes Poly-(alkylenoxid)diacrylat umfasst.

10. Gegenstand nach Anspruch 7, wobei es sich bei dem porösem Basissubstrat um ein poröses Basissubstrat aus Ethylen-Trichlorfluorethylen (ECTFE) handelt.

## Revendications

1. Procédé de fabrication d'un substrat fonctionnalisé, le procédé consistant à :
1) fournir un substrat de base poreux comportant des surfaces interstitielles et des surfaces externes ;
2) saturer le substrat de base poreux avec une première solution comprenant (a) au moins un monomère de greffage comportant au moins un groupe (méth)acrylate et au moins un groupe additionnel à insaturation éthylénique, polymérisable par polymérisation radicalaire ; et éventuellement (b) un ou plusieurs monomères additionnels comportant au moins un groupe à insaturation éthylénique, polymérisable par polymérisation radicalaire et un groupe hydrophile ; et un agent de transfert de chaîne,
dans lequel au moins un des monomères (a) et/ou (b) est hydrophile ;
3) exposer le substrat de base poreux saturé à une dose contrôlée de rayonnement gamma de façon à former un premier substrat fonctionnalisé comprenant un polymère greffé fixé aux surfaces du substrat de base poreux.

2. Procédé selon la revendication 1, dans lequel le monomère (a) comprend un diacrylate de poly(oxyde d'alkylène).

3. Procédé selon la revendication 1, dans lequel lesdits monomères (a) comportant au moins un monomère de greffage comportant au moins un groupe (méth)acrylate et au moins un groupe additionnel à insaturation éthylénique, polymérisable par polymérisation radicalaire, comprennent un premier groupe (méth)acrylate pour le greffage dudit substrat de base poreux et un deuxième groupe méthacrylate pour la polymérisation ultérieure avec les monomères (a) et/ou (b).

4. Procédé selon la revendication 1, dans lequel ladite première solution comprend (b) un ou plusieurs monomères additionnels comportant un groupe polymérisable par polymérisation radicalaire et un groupe hydrophile.

5. Procédé selon la revendication 1, dans lequel la solution de monomères comprend :
(a) de 1 % à 10 % en poids de monomères (a) ;
(b) de 1 % à 10 % en poids de monomères (b) ;
(c) de 0,02 % à 0,15 % en poids d'un agent de transfert de chaîne ; et
(e) un solvant.

6. Procédé selon la revendication 1, dans lequel lesdits monomères (a) ont la formule :
Z-Q-(CH(R¹)-CH₂-O)ₙ-C(O)-CR³=CH₂ II
dans laquelle Z est un groupe acrylate ou non acrylate polymérisable, à insaturation éthylénique ;
R³ est un atome d'hydrogène ou un groupe CH₃ ;
R¹ est un atome d'hydrogène ou un groupe alkyle C₁-C₄, n vaut de 2 à 100,
et Q est un groupe de liaison divalent sélectionné parmi une liaison covalente « - » ou un groupe -O-, -NR¹-, -CO₂- ou -CONR¹-, où R¹ est un atome d'hydrogène ou un groupe alkyle C₁-C₄.

7. Article comprenant un substrat de base poreux comportant des surfaces interstitielles et des surfaces externes et un polymère greffé s'étendant à partir des surfaces du substrat de base poreux, le polymère comprenant des unités monomères interpolymérisées de :
(a) au moins un monomère de greffage comportant au moins un groupe (méth)acrylate et au moins un groupe additionnel à insaturation éthylénique, polymérisable par polymérisation radicalaire ; éventuellement (b) un ou plusieurs monomères additionnels comportant au moins un groupe à insaturation éthylénique, polymérisable par polymérisation radicalaire et un groupe hydrophile ; (c) un agent de transfert de chaîne ; et
dans lequel au moins un des monomères (a) et/ou (b) est hydrophile, et dans lequel le degré moyen de polymérisation desdits polymères est de 2 à 250.

8. Article selon la revendication 7, comprenant en outre des groupes hydrophiles greffés s'étendant à partir des surfaces du substrat de base poreux.

9. Article selon la revendication 7, dans lequel le polymère comprend un diacrylate de poly(oxyde d'alkylène) greffé.

10. Article selon la revendication 7, dans lequel le substrat de base poreux est un substrat de base poreux d'éthylène-trichlorofluoroéthylène (ECTFE).
